Europäisches Patentamt

European Patent Office

Office européen des brevets

(19)

(11) Veröffentlichungsnummer: **0 071 866**
**A1**

(12) **EUROPÄISCHE PATENTANMELDUNG**

(21) Anmeldenummer: 82106747.7

(22) Anmeldetag: 26.07.82

(51) Int. Cl.³: **G 01 P 13/04**

(30) Priorität: 07.08.81 DE 3131300

(43) Veröffentlichungstag der Anmeldung: **16.02.83**
**Patentblatt 83/7**

(84) Benannte Vertragsstaaten: **FR GB IT**

(71) Anmelder: **SIEMENS AKTIENGESELLSCHAFT, Berlin und München Wittelsbacherplatz 2, D-8000 München 2 (DE)**

(72) Erfinder: **Bachmann, Gerhard, Paul-Gossen-Strasse 119, D-8520 Erlangen (DE)**
Erfinder: **Zimmermann, Horst, Noether Strasse 20, D-8520 Erlangen (DE)**

(54) Einrichtung zum Erzeugen einer der Drehzahl und Drehrichtung eines Gleichstromantriebes proportionalen Spannung.

(57) Die Erfindung betrifft eine Einrichtung zur Bildung einer der Drehzahl und Drehrichtung einer Wechselstromtacho (1) proportionalen Gleichspannung. Die Ausgangsspannungen der Tachomaschine (1) werden hier mit einem aktiven Gleichrichter (2) gleichgerichtet und gegebenenfalls in der Polarität mittels eines Umkehrverstärkers (3) umgedreht. Zur Bestimmung der erforderlichen Polarität wird die Phasenfolge der Ausgangsspannungen in einer Phasenfolgelogik (7) ausgewertet.

EP 0 071 866 A1

0071866

SIEMENS AKTIENGESELLSCHAFT
Berlin und München

Unser Zeichen
VPA **81** P **3 1 2 0** E

Einrichtung zum Erzeugen einer der Drehzahl und Drehrichtung eines Gleichstromantriebes proportionalen Spannung

Die Erfindung betrifft eine Einrichtung zum Erzeugen einer der Drehzahl und Drehrichtung eines Gleichstromantriebes proportionalen Spannung, insbesondere für einen Hauptspindelantrieb bei einer Werkzeugmaschine, mittels einer mit dem Antrieb gekuppelten Mehrphasen-Tachometermaschine, einen an die Statorwicklung angeschlossenen Gleichrichter und einer Auswertung der Phasenlage der Statorspannungen.

Es ist bereits eine Drehzahlmessung mit gleichzeitiger Anzeige der Drehrichtung bekannt, bei der die aus einem Zweiphasengenerator mit Permanentmagnetrotor entnommenen Statorspannungen derart über Blindwiderstände auf ein Doppeldrehstrominstrument geschaltet werden, daß Ausschlagsrichtung und Amplitude des Instrumentes als Indiz für die vorgenannten Größen dienen können (vgl. archivtechnisches Messen, Juni 1964, Seiten 121 bis 122).

Diese Schaltungen haben sich bei hochgenauen Gleichstromantrieben, vor allem bei Werkzeugmaschinen - vermutlich wegen der diesem Verfahren innewohnenden Ungenauigkeit - nicht eingeführt. Hier werden nach wie vor im allgemeinen mit dem Motor gekuppelte Gleichstrom-Tachometermaschinen benutzt, die vor allem von der Wartung und Standzeit oft mit Problemen behaftet sind, da Bürsten und Kommutatoren verschleißen.

Die Aufgabe der vorliegenden Erfindung besteht darin, eine Einrichtung der eingangs genannten Art, vor allem für Hauptspindelantriebe zu schaffen, mit der eine sehr präzise und einfache verschleiß- und wartungsfreie Erfassung von

Ch 2 Mar / 29.07.1981

0071866

Drehzahl und Drehrichtung mittels einer bürstenlosen Mehrphasen-Tachometermaschine möglich ist. Diese Aufgabe wird erfindungsgemäß gelöst durch einen an den schwellwertlosen, aktiven Gleichrichter angeschlossenen, durch elektronische Schalter wahlweise einschaltbaren oder umgehbaren Umkehrverstärker, einen ebenfalls an die Statorwicklung angeschlossenen Rechteck-Impulsformer und eine ihm nachgeschaltete Phasenfolgelogik zur Ansteuerung der elektronischen Schalter.

Vorteilhafterweise wird dabei ein dreiphasiger Wechselstromtachometer bekannter Bauart mit einem Permanentmagneten als Rotor verwendet.

Für die Erfassung der Phasenfolge genügen zwei Phasenspannungen.

Anhand eines in der Zeichnung dargestellten Ausführungsbeispieles sei die Erfindung näher erläutert; es zeigen:

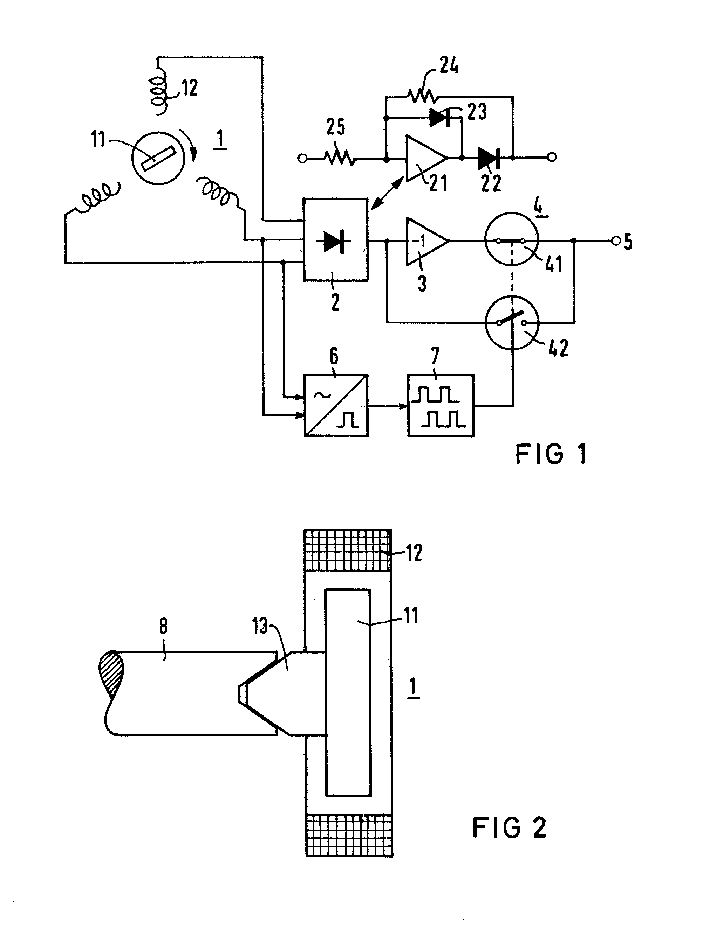

Fig. 1 das Prinzipschaltbild der Einrichtung zur Erfassung von Drehzahl und Drehrichtung und

Fig. 2 schematisch den mechanischen Aufbau der Anordnung.

Über eine Konussteckverbindung 13 wird von der Welle 8 eines nicht gezeigten Hauptspindelgleichstromantriebes der Rotor 11 einer Drehstrom-Tachometermaschine 1 angetrieben. Der Rotor 11 wird dabei durch einen Permanentmagneten gebildet. Die in den drei Statorwicklungen 12 induzierten, um $120^{\circ}$ phasenverschobenen Sinusspannungen werden in einem idealen Gleichrichter 2 gleichgerichtet. Dieser ideale Gleichrichter besteht je Sinusspannung aus einem Umkehrverstärker 21 und einer nachgeschalteten Diode 22. In der Rückführung des Verstärkers 21 ist eine weitere Diode 23 angeordnet, während zwischen Eingang und Ausgang der Gesamtanordnung ein Widerstand 24 vorge-

0071866

sehen ist, der etwa den gleichen Ohmwert wie der Eingangswiderstand 25 hat. Ein derartiger aktiver Gleichrichter gibt auch bei sehr kleinen Eingangsspannungen am
Eingang einwandfrei am Ausgang eine dem arithmetischen
Mittelwert entsprechende Gleichspannung ab. Der Einfachheit halber wurde nur einer der aktiven Verstärker im
Gleichrichter 2 gezeichnet; es sind für alle Phasen ideale
Gleichrichter vorhanden, deren Ausgangsspannungen addiert
werden.

An den Ausgangsklemmen des Gleichrichters 2 ist ein Umkehrverstärker 3 angeschlossen, der durch eine elektronische
Schalteinrichtung 4 wahlweise aktiviert oder umgangen
werden kann. Diese Schaltanordnung besteht aus z. B. zwei
Transistorschaltern 41, 42, von denen jeweils der eine
geöffnet und der andere geschlossen ist. Je nach der
Stellung der Schalter 41, 42 erscheint daher am Ausgang 5
eine Spannung, die in der Amplitude der Drehzahl und in
der Polarität der Drehrichtung proportional ist. Zur Vorgabe der Polarität, d. h. zum Ansteuern der elektronischen
Schalter 41, 42 werden zwei der sinusförmigen Phasenspannungen durch Auswertung der Nulldurchgänge in entsprechende phasenverschobene Rechteckimpulsfolgen mit
einem Rechteck-Impulsformer 6 umgeformt und anschließend
einer an sich bekannten Phasenfolgelogik 7 zugeführt. Diese
Phasenfolgelogik stellt aus der Phasenbeziehung der beiden
Rechteckimpulsfolgen die Drehrichtung fest und gibt dies
als entsprechendes Signal an die elektronischen Schalter
41 und 42.

Eine Phasenfolgelogik, mit der aus den beiden verschobenen
Rechteckimpulsfolgen ein entsprechendes Drehrichtungssignal gewonnen werden kann, ist beispielsweise in der
Siemens-Zeitschrift Oktober 1960, Heft 10, Seite 669,
insbesondere Bild 11, näher beschrieben.

3 Patentansprüche
2 Figuren

# 0071866

Patentansprüche

1. Einrichtung zum Erzeugen einer der Drehzahl und Drehrichtung eines Gleichstromantriebes proportionalen Spannung, insbesondere für einen Hauptspindelantrieb einer Werkzeugmaschine, mittels einer mit dem Antrieb gekuppelten bürstenlosen Mehrphasen-Tachometermaschine, einen an die Statorwicklung angeschlossenen Gleichrichter und einer Auswertung der Phasenlage der Statorspannungen, g e - k e n n z e i c h n e t durch einen an den schwellwertlosen aktiven Gleichrichter (2) angeschlossenen, durch elektronische Schalter (41, 42) wahlweise einschaltbaren oder umgehbaren Umkehrverstärker (3), einen ebenfalls an die Statorwicklungen (12) angeschlossenen Rechteck-Impulsformer (6) und eine ihm nachgeschaltete Phasenfolgelogik (7) zur Ansteuerung der elektronischen Schalter (41, 42).

2. Einrichtung nach Anspruch 1, g e k e n n z e i c h - n e t durch die Verwendung einer zwei Phasen auswertenden Phasenfolgelogik (7).

3. Einrichtung nach Anspruch 1, g e k e n n z e i c h - n e t durch einen robusten Drehstromtacho (1) mit einem über eine Konusstreckverbindung (13) auf die Antriebswelle (8) des Antriebes aufsteckbaren Rotor (11) mit Permanentmagnet und vergossenen Statorwicklungen (12).

FIG 1

FIG 2

| | | |
|---|---|---|

**EUROPÄISCHER RECHERCHENBERICHT**

Europäisches Patentamt

0071866

Nummer der Anmeldung

EP 82 10 6747

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | --- | | G 01 P 13/04 |
| X | DE-A-2 935 525 (H.D. LAYH) * Seite 4; Figur 1 * | 1 | |
| | --- | | |
| X | CH-A- 529 352 (CKD PRAHA) * Spalte 1, Zeile 35 - Spalte 2, Zeile 14; Figur 1 * | 2 | |
| | --- | | |
| A | US-A-3 629 705 (R.G. WALTERS) * Spalte 3, Zeilen 41-49; Figur 2 * | 1 | |
| | --- | | |
| A,D | ATM ARCHIV FÜR TECHNISCHES MESSEN, V145-12, Lieferung 134, Juni 1964, Seiten 121,122, München, DE. F. KOPPITZ: "Drehzahlmessung mit gleichzeitiger Anzeige der Drehrichtung" * Seite 121, Zeilen 1-37; Figur 1 * | 1 | |
| | ----- | | |

RECHERCHIERTE SACHGEBIETE (Int. Cl. ³)

G 01 P

Der vorliegende Recherchenbericht wurde für alle Patentansprüche erstellt.

| Recherchenort | Abschlußdatum der Recherche | Prüfer |
|---|---|---|
| DEN HAAG | 11-11-1982 | HANSEN P. |